# EUROPÄISCHE PATENTANMELDUNG

(11) **EP 3 944 800 A1**
(43) Veröffentlichungstag der Anmeldung: **02.02.2022**
(21) Anmeldenummer: 21183170.6
(22) Anmeldetag: 01.07.2021
(51) Int. Cl.: A47L 9/28, A47L 9/00, A47L 9/04

(54) **LADEVORRICHTUNG FÜR EINEN STAUBSAUGER UND VERFAHREN ZU DEREN STEUERUNG, STAUBSAUGANLAGE**

(30) Priorität: 31.07.2020 CN 202010756180
(71) Anmelder: BSH Hausgeräte GmbH, 81739 München (DE)
(72) Erfinder: Guo, Yao, Nanjing (CN); Lu, Peng, Nanjing, 210046 (CN); Xue, Qingfei, JuRong, 212426 (CN)

(57) **Zusammenfassung**

Die vorliegende Erfindung betrifft eine Ladevorrichtung für einen Staubsauger (1) und ein Verfahren zu deren Steuerung sowie eine Staubsauganlage (100). Die Ladevorrichtung für einen Staubsauger (1) umfasst einen Ladeabschnitt (11) und einen Reinigungsabschnitt (12), wobei der Ladeabschnitt (11) eine erste Ladeschnittstelle aufweist, die zur Abstimmung auf eine zweite Ladeschnittstelle des Staubsaugers (2) eingerichtet ist, während der Reinigungsabschnitt (12) zur Kontaktierung mit einer Bodenbürstenbaugruppe (21) des Staubsaugers (2) eingerichtet ist und beim Verbinden der ersten Ladeschnittstelle mit der zweiten Ladeschnittstelle als Antwort auf einen Reinigungsbefehl eine Reinigung der Bodenbürstenbaugruppe (21) des Staubsaugers (2) durchführt. Mit diesen Ausgestaltungen kann eine neuartige Ladevorrichtung für einen Staubsauger (2) geschaffen werden.

## Beschreibung

### Gebiet der Erfindung

Die Ausführungsbeispiele der vorliegenden Erfindung beziehen sich auf den Bereich elektrischer Geräte, insbesondere auf eine Ladevorrichtung für einen Staubsauger und ein Verfahren zu deren Steuerung sowie eine Staubsauganlage.

### Technischer Hintergrund

Staubsauger sind ein weit verbreitetes Haushaltsreinigungsgerät. Beim Betrieb der Bodenbürste eines Staubsaugers ist die Walzenbürste anfällig für die Anhaftung von Staub und Haaren, welche rechtzeitig entfernt werden müssen. Anderenfalls würde es leicht zur abermaligen Verschmutzung kommen.

Zurzeit erfolgt die Entfernung von Staub und Haaren in der Regel manuell oder mittels eines zusätzlich am Staubsauger vorgesehenen Reinigungsmechanismus, mit dem die Bodenbürstenbaugruppe des Staubsaugers gereinigt werden kann. Solche Lösungen zur Reinigung der Bodenbürstenbaugruppe erfordern jedoch eine getrennte Durchführung der Aufladung des Staubsaugers und der Reinigung der Bodenbürstenbaugruppe, was die Bedienung verkompliziert.

### Stand der Technik

Die JP 2014 - 200 379 A offenbart einen Staubsauger mit einem Staubsaugerkörper mit einem elektrisch angetriebenen Saugteil mit einem Elektromotor, einem ersten Kontaktpunkt, einer Batterie, die an dem elektrisch angetriebenen Saugteil zum Antreiben des Staubsaugers angebracht ist und einen Ladeständer mit einem zweiten Kontaktpunkt, der mit dem ersten Kontaktpunkt in Kontakt kommt, wenn der Staubsaugerkörper angeordnet ist. Nachteilig daran ist, dass keine Reinigung der Bodenbürste in dem Ladeständer für den Staubsauger erfolgen kann.

### Offenbarung der Erfindung

Die Aufgabe der Ausführungsbeispiele der vorliegenden Erfindung besteht darin, eine Ladevorrichtung für einen Staubsauger anzubieten, die eine Funktion zur Reinigung der Bodenbürstenbaugruppe besitzt.

Zur Lösung dieser Aufgabe stellen die Ausführungsbeispiele der Erfindung eine Ladevorrichtung für einen Staubsauger bereit, die einen Ladeabschnitt und einen Reinigungsabschnitt umfasst, wobei der Ladeabschnitt eine erste Ladeschnittstelle aufweist, die zur Abstimmung auf eine zweite Ladeschnittstelle des Staubsaugers eingerichtet ist, während der Reinigungsabschnitt zur Kontaktierung mit einer Bodenbürstenbaugruppe des Staubsaugers eingerichtet ist und beim Verbinden der ersten Ladeschnittstelle mit der zweiten Ladeschnittstelle als Antwort auf einen Reinigungsbefehl eine Reinigung der Bodenbürstenbaugruppe des Staubsaugers durchführt.

Gegenüber dem Stand der Technik bieten die Ausgestaltungen der Ausführungsbeispiele der Erfindung folgende vorteilhafte Wirkungen:
Die Ladevorrichtung für einen Staubsauger kann einen Ladeabschnitt und einen Reinigungsabschnitt umfassen, wobei die erste Ladeschnittstelle des Ladeabschnitts auf die zweite Ladeschnittstelle am Staubsauger abgestimmt ist, um den Staubsauger laden zu können. Wenn die erste Ladeschnittstelle mit der zweiten Ladeschnittstelle verbunden ist, tritt der Reinigungsabschnitt mit der Bodenbürstenbaugruppe des Staubsaugers in Kontakt und kann als Antwort auf einen Reinigungsbefehl eine Reinigung der Bodenbürstenbaugruppe des Staubsaugers durchführen. Somit kann eine neuartige Ladevorrichtung für einen Staubsauger mit einer Funktion zur Reinigung der Bodenbürstenbaugruppe geschaffen werden, die eine Reinigung der Bodenbürstenbaugruppe des Staubsaugers während dessen Ladung erlaubt. Durch die Möglichkeit, als Antwort auf den Reinigungsbefehl die Bodenbürstenbaugruppe des Staubsaugers zu reinigen, können weitere manuelle Eingriffe und manuelle Betreuungen eingespart werden, so dass eine Vereinfachung der benutzerseitigen Bedienung zu erwarten ist.

Optional ist vorgesehen, dass die Ladevorrichtung für einen Staubsauger ferner einen Einschaltknopf umfasst, durch dessen Drücken der Reinigungsbefehl erzeugt wird.

Optional ist vorgesehen, dass, wenn zum Zeitpunkt des Entstehens des Reinigungsbefehls der Staubsauger durch den Ladeabschnitt geladen wird, dieser Ladevorgang zunächst abgebrochen und erst dann fortgeführt wird, wenn der Reinigungsabschnitt die Reinigung vollendet hat.

Optional ist vorgesehen, dass die Ladevorrichtung für einen Staubsauger ferner eine Basisbaugruppe, in der der Reinigungsabschnitt angeordnet ist, und einen Träger umfasst, der an der Basisbaugruppe befestigt ist und an dem sich der Ladeabschnitt befindet. Somit kann der Staubsauger auf einfache Weise ohne manuelle Unterstützung an die Ladevorrichtung gehängt werden, wodurch die benutzerseitige Bedienung weiter vereinfacht und das Nutzererlebnis verbessert wird.

Optional ist vorgesehen, dass die Basisbaugruppe eine untere Abdeckung und ein oberes Gehäuse umfasst, wobei das obere Gehäuse und die untere Abdeckung lösbar miteinander verbunden sind und einen Aufnahmeraum zur Aufnahme des Reinigungsabschnitts einschließen, wobei bei auf dem oberen Gehäuse angeordnetem Staubsauger der Reinigungsabschnitt mit der Bodenbürstenbaugruppe des Staubsaugers in Kontakt steht.

Optional ist vorgesehen, dass der Reinigungsabschnitt eine Walzenbürstenreinigungsbaugruppe umfasst, die eine Abstreifbürste umfasst, wobei bei auf dem oberen Gehäuse angeordnetem Staubsauger die Abstreifbürste mit einer Walzenbürste in der Bodenbürstenbaugruppe in Kontakt steht.

Optional ist vorgesehen, dass die Basisbaugruppe ferner einen sich im Aufnahmeraum befindenden Schmutzsammelkasten zur Sammlung des durch die Abstreifbürste von der Walzenbürste beseitigten Schmutzes umfasst.

Optional ist vorgesehen, dass die Abstreifbürste über ein erstes Federteil an der unteren Abdeckung befestigt ist.

Optional ist vorgesehen, dass der Reinigungsabschnitt ferner eine Rollenreinigungsbaugruppe umfasst, die einen Antrieb, ein Reibrad und eine Abstreifplatte umfasst. Dabei ist der Antrieb in dem Aufnahmeraum angeordnet und dient zum Antreiben des Reibrads zur Drehung. Das Reibrad ist mit dem Antrieb gekoppelt und tritt beim Anordnen des Staubsaugers auf das obere Gehäuse mit der Rolle in der Bodenbürstenbaugruppe in Kontakt und nimmt bei der Drehung die Rolle mit. Die Abstreifplatte befindet sich in dem Aufnahmeraum und steht mit der Rolle in Kontakt. Durch die Reinigung der Rolle kann die Bodenbürstenbaugruppe vollständiger gereinigt werden.

Optional ist vorgesehen, dass die Abstreifplatte über ein zweites Federteil an der unteren Abdeckung befestigt ist.

Optional ist vorgesehen, dass der Antrieb einen Motor und ein Getriebe umfasst, wobei der Motor mit dem Getriebe gekoppelt ist und zum Antreiben des Getriebes dient, während das Getriebe mit dem Reibrad verbunden ist und dazu dient, das Reibrad in Drehung zu bringen.

Optional ist vorgesehen, dass die Basisbaugruppe ferner einen Schmutzkanal umfasst, der sich in dem Aufnahmeraum befindet und zur Sammlung des durch die Abstreifplatte von der Rolle abgestreiften Schmutzes verwendet wird.

Optional ist vorgesehen, dass der Schmutzkanal mit einer ersten Ausnehmung und einer zweiten Ausnehmung versehen ist, wobei die erste Ausnehmung zum Durchführen des Reibrads und die zweite Ausnehmung zum Durchführen der Abstreifplatte ausgebildet ist.

Optional ist vorgesehen, dass das obere Gehäuse eine Ablageplatte umfasst, die relativ zur unteren Abdeckung beweglich mit dieser verbunden und mit einer Öffnung versehen ist, wobei sich die Ablageplatte beim Anordnen des Staubsaugers auf die Ablageplatte zur unteren Abdeckung hinbewegt, um über die Öffnung zumindest einen Teil des Reinigungsabschnitts freizulegen. Auf diese Weise kann gewährleistet werden, dass der Reinigungsabschnitt erst beim Anordnen des Staubsaugers auf die Ablageplatte freigelegt wird. Bei Nichtnutzung der Ladevorrichtung für einen Staubsauger kann der Reinigungsabschnitt in dem Aufnahmeraum der Basisbaugruppe verborgen sein, wodurch die Benutzungssicherheit der Ladevorrichtung für einen Staubsauger erhöht werden kann.

Optional ist vorgesehen, dass der Reinigungsabschnitt als Antwort auf den Reinigungsbefehl ein Einschalt-Steuersignal erzeugt, das dazu dient, den Staubsauger in Betrieb zu setzen.

Optional ist vorgesehen, dass der Ladeabschnitt ferner eine Signalsendeschnittstelle umfasst, die zum Übertragen des empfangenen Einschalt-Steuersignals an eine Signalempfangsschnittstelle des Staubsaugers dient.

Die Ausführungsbeispiele der Erfindung schlagen weiterhin ein Verfahren zur Steuerung einer Ladevorrichtung für einen Staubsauger vor, das das Ermitteln über den Reinigungsabschnitt beim Verbinden der ersten Ladeschnittstelle mit der zweiten Ladeschnittstelle, ob ein Reinigungsbefehl empfangen wird, und das Reinigen der Bodenbürstenbaugruppe des Staubsaugers durch den Reinigungsabschnitt beim Empfang des Reinigungsbefehls umfasst.

Optional ist vorgesehen, dass das Verfahren zur Steuerung einer Ladevorrichtung für einen Staubsauger ferner Folgendes umfasst: der Reinigungsabschnitt dann mit der Reinigung der Bodenbürstenbaugruppe aufhört, wenn ermittelt wird, dass die vom Reinigungsabschnitt an der Bodenbürstenbaugruppe vorgenommene Reinigung eine voreingestellte Dauer erreicht.

### Darstellung der Figuren

Es zeigen:
- Fig. 1: eine schematische strukturelle Darstellung eines Staubsaugers gemäß den Ausführungsbeispielen der Erfindung, der an einer Ladevorrichtung für einen Staubsauger angeordnet ist;
- Fig. 2: eine schematische Darstellung der relativen Position zwischen einem Staubsauger gemäß den Ausführungsbeispielen der Erfindung und einer Ladevorrichtung für einen Staubsauger;
- Fig. 3: eine teilweise schematische strukturelle Darstellung eines Staubsaugers gemäß den Ausführungsbeispielen der Erfindung;
- Fig. 4: eine teilweise schematische strukturelle Darstellung einer Ladevorrichtung für einen Staubsauger gemäß den Ausführungsbeispielen der Erfindung;
- Fig. 5: eine teilweise strukturelle Schnittdarstellung einer Ladevorrichtung für einen Staubsauger gemäß den Ausführungsbeispielen der Erfindung;
- Fig. 6: ein Ablaufdiagramm eines Verfahrens zur Steuerung einer Ladevorrichtung für einen Staubsauger gemäß den Ausführungsbeispielen der Erfindung.

### Konkrete Ausführungsformen

Zum besseren Verständnis der Aufgabe, der Merkmale und der vorteilhaften Wirkungen der Ausführungsbeispiele der Erfindung werden nachfolgend die konkreten Ausführungsbeispiele der Erfindung anhand der beigefügten Zeichnungen näher erläutert.

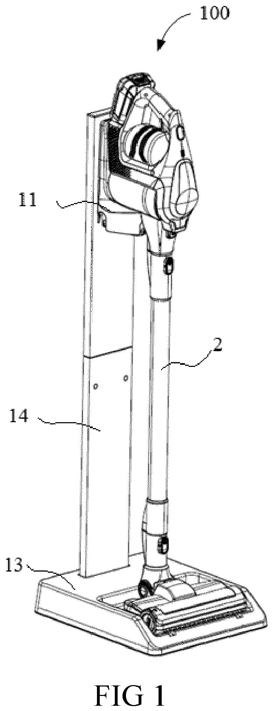

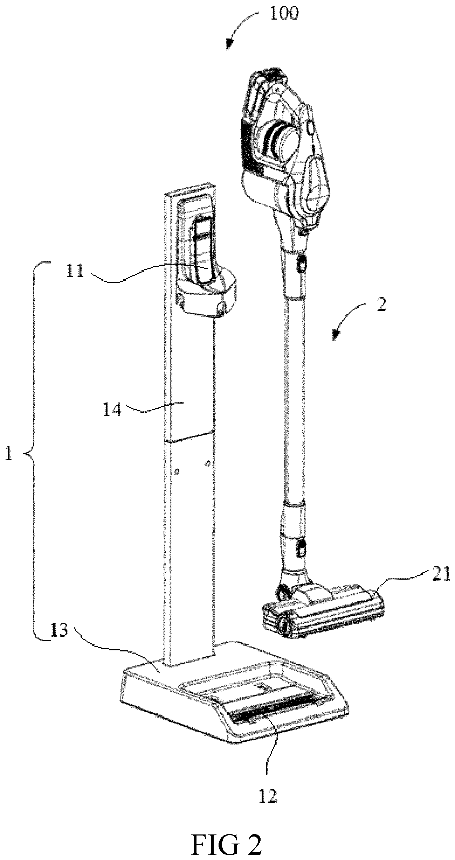

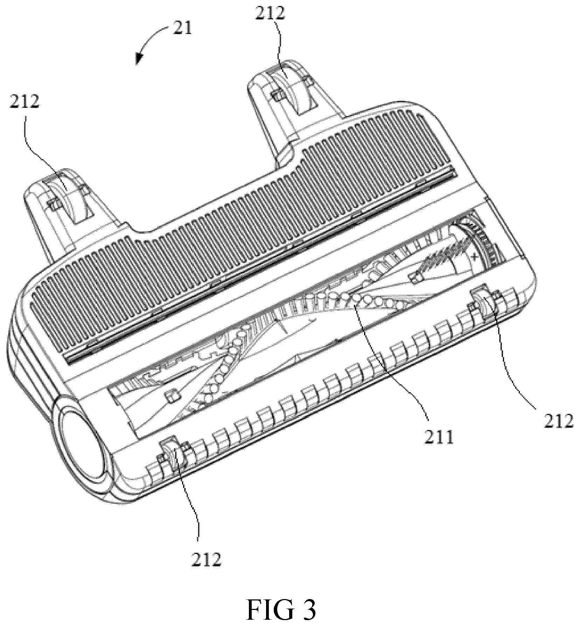

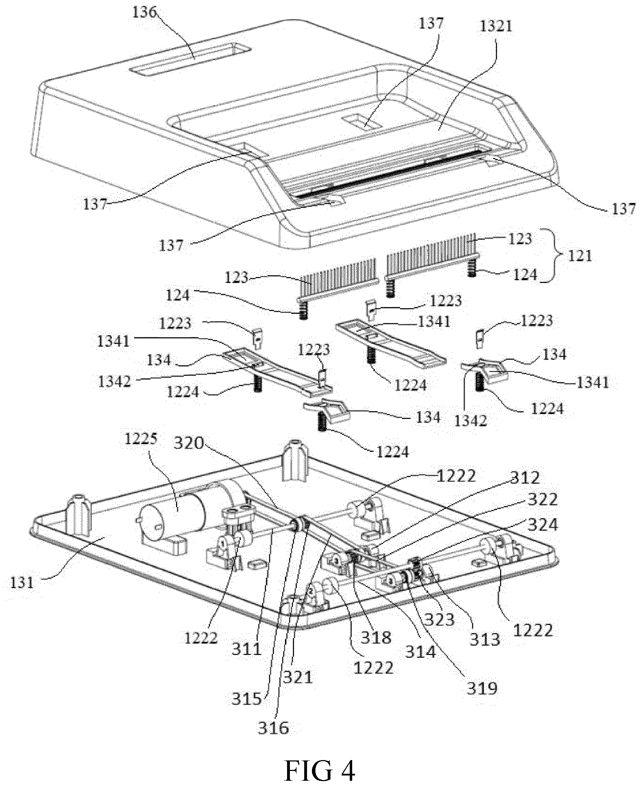

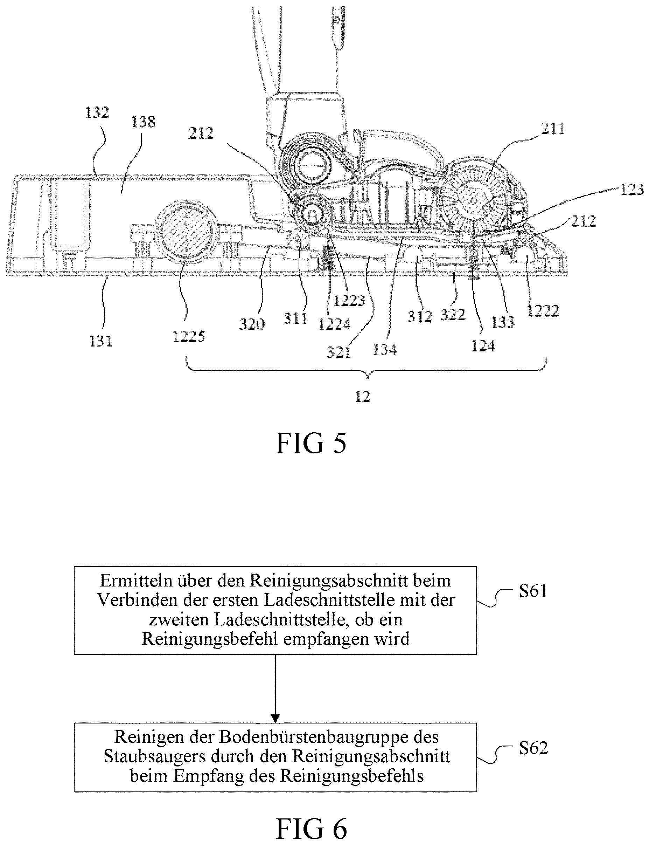

Es wird auf Fig. 1 Bezug genommen, die eine schematische strukturelle Darstellung eines Staubsaugers gemäß den Ausführungsbeispielen der Erfindung zeigt, der an einer Ladevorrichtung für einen Staubsauger angeordnet ist. Es wird auf Fig. 2 verwiesen, die eine schematische Darstellung der relativen Position zwischen einem Staubsauger gemäß den Ausführungsbeispielen der Erfindung und einer Ladevorrichtung für einen Staubsauger zeigt. Zudem zeigt Fig. 3 eine teilweise schematische strukturelle Darstellung eines Staubsaugers gemäß den Ausführungsbeispielen der Erfindung, Fig. 4 eine teilweise schematische strukturelle Darstellung einer Ladevorrichtung für einen Staubsauger gemäß den Ausführungsbeispielen der Erfindung und Fig. 5 eine teilweise strukturelle Schnittdarstellung einer Ladevorrichtung für einen Staubsauger gemäß den Ausführungsbeispielen der Erfindung. Im Folgenden wird der Aufbau einer Ladevorrichtung für einen Staubsauger unter Bezugnahme auf die Figuren 1 bis 5 beschrieben.

In konkreten Ausführungen kann die Ladevorrichtung für einen Staubsauger 1 einen Ladeabschnitt 11 und einen Reinigungsabschnitt 12 umfassen. Der Ladeabschnitt 11 weist eine erste Ladeschnittstelle auf, die auf eine zweite Ladeschnittstelle eines Staubsaugers 2 abgestimmt sein kann. Wenn die erste Ladeschnittstelle mit der zweiten Ladeschnittstelle verbunden ist, kann der Staubsauger 2 durch den Ladeabschnitt 11 geladen werden. Der Reinigungsabschnitt 12 steht mit einer Bodenbürstenbaugruppe 21 des Staubsaugers 2 in Kontakt und kann dann, wenn die erste Ladeschnittstelle und die zweite Ladeschnittstelle miteinander verbunden sind, als Antwort auf einen Reinigungsbefehl die Bodenbürstenbaugruppe 21 des Staubsaugers 2 reinigen.

In konkreten Ausführungen lässt sich der Reinigungsbefehl auf verschiedene Weise erzeugen. So kann die Ladevorrichtung für einen Staubsauger 1 z. B. einen Einschaltknopf umfassen, durch dessen Drücken ein Reinigungsbefehl erzeugt werden kann. Darüber hinaus kann man beispielsweise dann einen Reinigungsbefehl erhalten, wenn eine Anordnung des Staubsaugers 2 an der Ladevorrichtung für einen Staubsauger 1 erfasst wird. Überdies ist es auch denkbar, dass der Staubsauger 2 mit einem Reinigungsknopf versehen ist, wobei ein Reinigungsbefehl generiert wird, wenn der Reinigungsknopf beim Anordnen des Staubsaugers 2 an die Ladevorrichtung für einen Staubsauger 1 betätigt wird. Selbstverständlich kann der Reinigungsbefehl auch auf andere Weise erzeugt werden, worauf hier nicht mehr im Detail eingegangen wird.

Da die in der Bodenbürstenbaugruppe 21 befindliche Walzenbürste 211 bei ausgeschaltetem Staubsauger 2 keine aktive Bewegung durchführen kann, kann der Staubsauger 2 eingeschaltet werden, um eine Reinigung der Walzenbürste 211 durch den Reinigungsabschnitt 12 zu ermöglichen.

In einem Ausführungsbeispiel der Erfindung erzeugt der Reinigungsabschnitt 12 als Antwort auf den Reinigungsbefehl ein Einschalt-Steuersignal, das dazu dient, den Staubsauger 2 in Betrieb zu setzen. Weiterhin kann der Reinigungsabschnitt 12 nach dem Abschluss der Reinigung der Bodenbürstenbaugruppe 21 einen Abschlussbefehl erzeugen, wobei als Antwort auf den Abschlussbefehl ein Ausschalt-Steuersignal zum Ausschalten des Staubsaugers 2 erzeugt werden kann, um den Staubsauger 2 auszuschalten.

Der Staubsauger 2 wird also anhand des Einschalt-Steuersignals, das als Antwort auf den Reinigungsbefehl erzeugt wird, automatisch eingeschaltet oder anhand des Ausschalt-Steuersignals, das als Antwort auf den Abschlussbefehl erzeugt wird, automatisch ausgeschaltet. Auf diese Weise wird ein automatisierter Reinigungsbetrieb des Staubsaugers 2 realisiert, die benutzerseitige Bedienung vereinfacht und das Nutzererlebnis verbessert.

In einem weiteren Ausführungsbeispiel der Erfindung lässt sich der Staubsauger 2 beispielsweise durch Drücken einer Ein-/Ausschalttaste am Staubsauger 2 manuell einschalten. Nach dem Abschluss der Reinigung der Bodenbürstenbaugruppe 21 durch den Reinigungsabschnitt 12 wird die Ein-/Ausschalttaste noch einmal gedrückt, um den Staubsauger 2 auszuschalten.

In konkreten Ausführungen kann der Ladeabschnitt 11 ferner eine Signalsendeschnittstelle umfassen, die zum Übertragen des empfangenen Einschalt-Steuersignals an eine Signalempfangsschnittstelle des Staubsaugers 2 dient. Über diese Signalsendeschnittstelle lässt sich auch das empfangene Ausschalt-Steuersignal an die Signalempfangsschnittstelle des Staubsaugers 2 übermitteln.

In einem Ausführungsbeispiel der Erfindung wird das Einschalt-Steuersignal oder das Ausschalt-Steuersignal drahtgebunden übermittelt. Beispielsweise umfasst die Signalsendeschnittstelle einen 2-poligen Verbinder, der insbesondere an dem Ladeabschnitt 11 angeordnet sein kann, während der Staubsauger 2 mit einer auf den 2-poligen Verbinder abgestimmten Signalempfangsschnittstelle versehen ist, die zum Empfang des über den 2-poligen Verbinder übertragenen Einschalt-Steuersignals oder Ausschalt-Steuersignals dient.

In einem weiteren Ausführungsbeispiel der Erfindung kann es sich bei der Signalsendeschnittstelle um ein drahtloses Kommunikationsmodul, wie etwa ein Bluetooth-Kommunikationsmodul, ein WiFi-Kommunikationsmodul, ein NFC-Kommunikationsmodul, handeln. Entsprechend ist die am Staubsauger 2 vorgesehene Signalempfangsschnittstelle auf die Signalsendeschnittstelle abgestimmt. Das heißt, sowohl die Signalsendeschnittstelle als auch die Signalempfangsschnittstelle sind z. B. als Bluetooth-Kommunikationsmodul oder als WiFi-Kommunikationsmodul ausgebildet.

In konkreten Ausführungen können die erste Ladeschnittstelle und die zweite Ladeschnittstelle jeweils auf verschiedene Weise aufgebaut sein, sofern die beiden Ladeschnittstellen aufeinander abgestimmt sind und im miteinander verbundenen Zustand der beiden Ladeschnittstellen eine elektrische Leitung stattfinden kann. So ist beispielsweise vorgesehen, dass eine der ersten und der zweiten Ladeschnittstelle als Steckdosenseite und die andere der ersten und der zweiten Ladeschnittstelle als Steckerseite fungiert. Des Weiteren können die erste Ladeschnittstelle und die zweite Ladeschnittstelle jeweils z. B. ein drahtloses Lademodul sein, wobei die drahtlosen Lademodule aufeinander abgestimmt sind. Selbstverständlich können die erste Ladeschnittstelle und die zweite Ladeschnittstelle auch anders konstruiert sein, worauf an dieser Stelle im Detail nicht mehr eingegangen wird.

In den Ausführungsbeispielen der Erfindung kann der Ladeabschnitt 11 zur Erhöhung der Sicherheit der ersten Ladeschnittstelle zusätzlich eine Ladebox umfassen, die einen Aufnahmeraum 138 zur Aufnahme der ersten Ladeschnittstelle und eine Öffnung zum Freilegen der ersten Ladeschnittstelle, die eine Verbindung der ersten Ladeschnittstelle mit der zweiten Ladeschnittstelle ermöglicht, aufweist.

Aus der obenstehenden Beschreibung ergibt sich, dass die Ladevorrichtung für einen Staubsauger einen Ladeabschnitt und einen Reinigungsabschnitt umfassen kann, wobei die erste Ladeschnittstelle des Ladeabschnitts auf die zweite Ladeschnittstelle am Staubsauger abgestimmt ist, um den Staubsauger laden zu können. Wenn die erste Ladeschnittstelle mit der zweiten Ladeschnittstelle verbunden ist, tritt der Reinigungsabschnitt mit der Bodenbürstenbaugruppe des Staubsaugers in Kontakt und kann als Antwort auf einen Reinigungsbefehl eine Reinigung der Bodenbürstenbaugruppe des Staubsaugers durchführen. Somit kann eine neuartige Ladevorrichtung für einen Staubsauger mit einer Funktion zur Reinigung der Bodenbürstenbaugruppe geschaffen werden, die eine Reinigung der Bodenbürstenbaugruppe des Staubsaugers während dessen Ladung erlaubt. Durch die Möglichkeit, als Antwort auf den Reinigungsbefehl die Bodenbürstenbaugruppe des Staubsaugers zu reinigen, können weitere manuelle Eingriffe und manuelle Betreuungen eingespart werden, so dass eine Vereinfachung der benutzerseitigen Bedienung zu erwarten ist.

In einem Ausführungsbeispiel der Erfindung ist vorgesehen, dass, wenn zum Zeitpunkt des Entstehens des Reinigungsbefehls der Staubsauger 2 durch den Ladeabschnitt 11 geladen wird, dieser Ladevorgang zunächst abgebrochen und erst dann fortgeführt wird, wenn der Reinigungsabschnitt 12 die Reinigung vollendet hat.

In konkreten Ausführungen lässt sich die Dauer einer Reinigung, die vom Reinigungsabschnitt 12 an der Bodenbürstenbaugruppe 21 vorgenommen wird, je nach Bedarf einstellen. Die Zeitmessung beginnt mit dem Start einer Reinigung der Bodenbürstenbaugruppe 21. Beim Erreichen der eingestellten Reinigungsdauer kann der Reinigungsabschnitt 12 dazu angesteuert, mit der Reinigung der Bodenbürstenbaugruppe 21 aufzuhören, und die Ladung des Staubsaugers 2 mittels des Ladeabschnitts 11 fortgeführt werden.

In einem weiteren Ausführungsbeispiel der Erfindung können die Ladung des Staubsaugers 2 mittels des Ladeabschnitts 11 und die Reinigung der Bodenbürstenbaugruppe 21 mittels des Reinigungsabschnitts 12 gleichzeitig durchgeführt werden.

In konkreten Ausführungen kann die Ladevorrichtung für einen Staubsauger 1 zusätzlich eine Basisbaugruppe 13 und einen Träger 14 umfassen. Der Reinigungsabschnitt 12 ist in der Basisbaugruppe 13 angeordnet. Der Träger 14 ist an der Basisbaugruppe 13 befestigt und der Ladeabschnitt 11 befindet sich an dem Träger 14. Die jeweilige Verbindungsstelle am Träger 14 für den Ladeabschnitt 11 kann in Abhängigkeit von der Position der zweiten Ladeschnittstelle des Staubsaugers 2 festgelegt werden, soweit bei auf der Basisbaugruppe 13 angeordnetem Staubsauger 2 eine Verbindung der zweiten Ladeschnittstelle mit der ersten Ladeschnittstelle des Ladeabschnitts 11 gewährleistet werden kann.

In der Basisbaugruppe 13 ist eine Montageöffnung 136 vorgesehen, die zur Anbringung des Trägers 14 an der Basisbaugruppe 13 dient.

Durch die Zusammenwirkung zwischen dem vorgesehenen Ladeabschnitt 11 und der Basisbaugruppe 13 kann der Staubsauger 2 derart an die Ladevorrichtung für einen Staubsauger 1 gehängt werden, dass der Staubsauger 2 leicht aufzubewahren und wieder abzunehmen ist. Nachdem der Benutzer unter Verwendung des Staubsaugers 2 die Reinigungsarbeit abgeschlossen hat, legt er den Staubsauger 2 auf den Träger 14 zurück, um eine Verbindung zwischen der ersten Ladeschnittstelle und der zweiten Ladeschnittstelle herzustellen und somit den Staubsauger 2 durch den Ladeabschnitt 11 laden zu lassen. Dabei kann die Bodenbürstenbaugruppe 21 durch den Reinigungsabschnitt 12 gereinigt werden.

In konkreten Ausführungen kann die Basisbaugruppe 13 eine untere Abdeckung 131 und ein oberes Gehäuse 132 umfassen. Hierbei sind das obere Gehäuse 132 und die untere Abdeckung 131 lösbar miteinander verbunden und schließen einen Aufnahmeraum 138 zur Aufnahme des Reinigungsabschnitts 12 ein. Bei auf dem oberen Gehäuse 132 angeordnetem Staubsauger 2 steht der Reinigungsabschnitt 12 mit der Bodenbürstenbaugruppe 21 des Staubsaugers 2 in Kontakt.

In konkreten Ausführungen kann die Bodenbürstenbaugruppe 21 des Staubsaugers 2 eine Walzenbürste 211 umfassen. Entsprechend kann der Reinigungsabschnitt 12 eine Abstreifbürste 123 umfassen. Bei auf dem oberen Gehäuse 132 angeordnetem Staubsauger 2 steht die Abstreifbürste 123 mit der Walzenbürste 211 in Kontakt, was eine Reinigung der Walzenbürste 211 durch die Abstreifbürste 123 erlaubt.

In den Ausführungsbeispielen der Erfindung kann die Abstreifbürste 123 sägezahnförmig oder kammförmig ausgebildet sein, um Schmutz von der Walzenbürste 211 abstreifen zu können.

In konkreten Ausführungen kann die Abstreifbürste 123 über ein erstes Federteil 124 an der unteren Abdeckung 131 befestigt sein, damit die Abstreifbürste 123 bei auf dem oberen Gehäuse 132 angeordnetem Staubsauger 2 unter Einwirkung der Schwerkraft des Staubsaugers 2 mit Hilfe des ersten Federteils 124 selbstanpassend soweit mit der Walzenbürste 211 in Kontakt treten kann, dass zwischen der Abstreifbürste 123 und der Walzenbürste 211 ein Druck beibehalten wird, der einen ausreichenden Kontakt zwischen der Abstreifbürste 123 und der Walzenbürste 211 und somit eine bessere Schmutzbeseitigung sicherstellen kann.

In den Ausführungsbeispielen der Erfindung kann das erste Federteil 124 Federn, elastisches Gummi oder ähnliche Bauteile, welche elastisch sind, umfassen.

In konkreten Ausführungen kann die Basisbaugruppe 13 ferner einen Schmutzsammelkasten 133 umfassen, in dem der durch die Abstreifbürste 123 von der Walzenbürste 211 beseitigte Schmutz gesammelt werden kann.

In konkreten Ausführungen werden durch die Abstreifbürste 123 Haare, Flocken bzw. Staub als Schmutz von der Walzenbürste 211 beseitigt. Der entfernte Schmutz fällt in den Schmutzsammelkasten 133 hinein, der unter Einwirkung eines Unterdrucks in einen Schmutzspeicherkasten des Staubsaugers 2 zur Speicherung von Schmutz transportiert werden kann.

In konkreten Ausführungen ist für eine Reinigung der Walzenbürste 211 mittels der Abstreifbürste 123 während einer Reinigung der Bodenbürstenbaugruppe 21 durch den Reinigungsabschnitt 12 eine Einschaltung des ausgeschalteten Staubsaugers 2 notwendig, um die Walzenbürste 211 in Drehung zu setzen, damit durch einen ständigen Kontakt zwischen der sich drehenden Walzenbürste 211 und der Abstreifbürste 123 Schmutz von der Walzenbürste 211 abgestreift werden kann.

Bei praktischer Anwendung kann die Bodenbürstenbaugruppe 21 des Staubsaugers 2 weiterhin eine Rolle 212 umfassen, die die Bewegung des Staubsaugers 2 während dessen Betriebs erleichtern kann. Beim Betrieb des Staubsaugers 2 bewegt sich die Rolle 212 auf dem Boden und kann dabei ebenfalls mit Schmutz belastet werden, der ohne rechtzeitige Beseitigung eine abermalige Verschmutzung verursachen würde. In den Ausführungsbeispielen der Erfindung kann der Reinigungsabschnitt 12 zur Erhöhung der Reinigungsleistung der Bodenbürstenbaugruppe 21 des Staubsaugers 2 weiter eine Rollenreinigungsbaugruppe umfassen. Die Rollenreinigungsbaugruppe kann einen Antrieb, ein Reibrad 1222 und eine Abstreifplatte 1223 umfassen.

Der Antrieb befindet sich in dem Aufnahmeraum 138 und kann das Reibrad 1222 in Drehung versetzen. Das Reibrad 1222 ist mit dem Antrieb gekoppelt und tritt beim Anordnen des Staubsaugers 2 auf das obere Gehäuse 132 mit der Rolle 212 in der Bodenbürstenbaugruppe 21 in Kontakt und nimmt bei der Drehung die Rolle 212 mit. Die Abstreifplatte 1223 befindet sich in dem Aufnahmeraum 138 und steht mit der Rolle 212 in Kontakt, so dass die Abstreifplatte 1223 beim Drehen der Rolle 212 Schmutz von dieser abstreifen kann.

In konkreten Ausführungen ist jeder Rolle 212 eine Abstreifplatte 1223 zugeordnet, d.h. die Anzahl der Abstreifplatte 1223 hängt von der Anzahl der Rolle 212 ab. Die Rolle 212 kann eine vordere Rolle und eine hintere Rolle umfassen, wobei die vordere Rolle und die hintere Rolle bei verschiedenen Typen des Staubsaugers 2 in unterschiedlichen Anzahlen bereitgestellt werden und an unterschiedlichen Positionen angeordnet sind. Es reicht schon aus, wenn die Abstreifplatte 1223 und das Reibrad 1222 jeweils entsprechend der Position der Rolle 212 am Staubsauger 2 positioniert sind.

In konkreten Ausführungen kann die Abstreifplatte 1223 über ein zweites Federteil 1224 an der unteren Abdeckung 131 befestigt sein, was eine Selbstanpassung der Relativposition zwischen der Rolle 212 und der Abstreifplatte 1223 ermöglicht. Bei auf dem oberen Gehäuse 132 angeordnetem Staubsauger 2 steht die Rolle 212 also mit der Abstreifplatte 1223 in Kontakt, wobei sich die von der Rolle 212 auf die Abstreifplatte 1223 einwirkende Kraft im Laufe der durch die Abstreifplatte 1223 an der Rolle 212 vorgenommenen Schmutzbeseitigung ändert, so dass über das zweite Federteil 1224 eine Selbstanpassung der Relativposition zwischen der Rolle 212 und der Abstreifplatte 1223 erfolgen kann. Dabei stellt das zweite Federteil 1224 eine für den federnden Kontakt zwischen der Abstreifplatte 1223 und der Rolle 212 notwendige Verformungskraft und Rückstellkraft bereit, um die Rolle 212 und die Abstreifplatte 1223 stets in ausreichendem Maße miteinander in Kontakt bleiben zu lassen und somit die Rolle 212 besser reinigen zu können.

In den Ausführungsbeispielen der Erfindung kann die Abstreifplatte 1223 gebogen sein und umfasst ein erstes Ende und ein zweites Ende, wobei das erste Ende die Rolle 212 federnd kontaktiert, während das zweite Ende mit dem zweiten Federteil 1224 verbunden ist. Die Abstreifplatte 1223 kehrt nach ihrem federnden Kontaktieren mit der Rolle 212 und dem Abschluss der Entfernung der durch Schmutz gebildeten Kontaminationsschicht in ihre Ausgangsposition zurück. Der Biegewinkel der gebogenen Ausgestaltung der Abstreifplatte 1223 lässt sich je nach Bedarf einstellen.

In konkreten Ausführungen kann der Antrieb einen Motor 1225 und ein Getriebe umfassen. Der Motor 1225 ist mit dem Getriebe gekoppelt und kann das Getriebe in Bewegung setzen. Das Getriebe ist mit dem Reibrad 1222 verbunden und kann eine Drehung des Reibrads 1222 bewirken. Das Getriebe kann jeweils entsprechend dem jeweiligen Aufbau der in der Basisbaugruppe 13 vorgesehenen weiteren Bauteile und der Ladevorrichtung für einen Staubsauger 1 aufgebaut sein.

In einem Ausführungsbeispiel der Erfindung kann das Getriebe eine erste Getriebewelle, eine zweite Getriebewelle, eine erste Riemenscheibe, eine zweite Riemenscheibe, eine dritte Riemenscheibe, einen ersten Riemen und einen zweiten Riemen umfassen. Auf die erste Getriebewelle sind die erste Riemenscheibe und die zweite Riemenscheibe aufgeschoben. Auf die zweite Getriebewelle ist die dritte Riemenscheibe aufgeschoben, während die Ausgangswelle des Motors 1225 und die erste Riemenscheibe mit dem ersten Riemen so überzogen sind, dass die Ausgangswelle des Motors 1225 mit der ersten Getriebewelle in kraftübertragender Verbindung steht. Die zweite Riemenscheibe und die dritte Riemenscheibe sind mit dem zweiten Riemen so überzogen, dass die erste Getriebewelle mit der zweiten Getriebewelle in kraftübertragender Verbindung steht. Dabei ist sowohl auf die erste Getriebewelle als auch auf die zweite Getriebewelle ein Reibrad 1222 aufgeschoben, das sich mit der zugeordneten ersten bzw. zweiten Getriebewelle mitdreht.

In einem weiteren Ausführungsbeispiel der Erfindung gemäß Fig. 4 und 5 kann das Getriebe eine dritte Getriebewelle 311, eine vierte Getriebewelle 312, eine fünfte Getriebewelle 313, eine sechste Getriebewelle 314, eine vierte Riemenscheibe 315, eine fünfte Riemenscheibe 316, eine sechste Riemenscheibe, eine siebte Riemenscheibe 318, eine achte Riemenscheibe 319, einen dritten Riemen 320, einen vierten Riemen 321, einen fünften Riemen 322, ein erstes Zahnrad 323 und ein zweites Zahnrad 324 umfassen, um den weiteren innenliegenden Bauteilen der Ladevorrichtung für einen Staubsauger 1 auszuweichen. Hierbei sind auf die dritte Getriebewelle 311 die vierte Riemenscheibe 315 und die fünfte Riemenscheibe 316 und auf die vierte Getriebewelle 312 die sechste Riemenscheibe und die siebte Riemenscheibe 318 aufgeschoben, während auf die fünfte Getriebewelle 313 die achte Riemenscheibe 319 aufgeschoben ist. Der dritte Riemen 320 ist über die Ausgangswelle des Motors 1225 und die vierte Riemenscheibe 315 so überzogen, dass die Ausgangswelle des Motors 1225 mit der dritten Getriebewelle 311 in kraftübertragender Verbindung steht. Der vierte Riemen 321 ist über die fünfte Riemenscheibe 316 und die sechste Riemenscheibe so überzogen, dass die dritte Getriebewelle 311 mit der vierten Getriebewelle 312 in kraftübertragender Verbindung steht. Der fünfte Riemen 322 ist über die siebte Riemenscheibe 318 und die achte Riemenscheibe 319 so überzogen, dass die vierte Getriebewelle 312 mit der fünften Getriebewelle 313 in kraftübertragender Verbindung steht. Darüber hinaus greift das auf die fünfte Getriebewelle 313 aufgeschobene erste Zahnrad 323 derart in das auf die sechste Getriebewelle 314 aufgeschobene zweite Zahnrad 324 ein, dass die fünfte Getriebewelle 313 mit der sechsten Getriebewelle 314 in kraftübertragender Verbindung steht. Dabei ist sowohl auf die dritte Getriebewelle 311 als auch auf die sechste Getriebewelle 314 ein Reibrad 1222 aufgeschoben, das sich mit der zugeordneten dritten 311 bzw. sechsten Getriebewelle 314 mitdreht.

Es versteht sich, dass das Getriebe je nach den Bedürfnissen tatsächlicher Anwendungsszenarien auch anders ausgeführt sein kann, sofern die Antriebskraft des Motors 1225 auf das Reibrad 1222 übertragen und das Reibrad 1222 somit in Drehung versetzt werden kann. Darauf wird an dieser Stelle nicht mehr mit Beispielen eingegangen.

In konkreten Ausführungen kann die Ladevorrichtung für einen Staubsauger 1 zusätzlich einen Schmutzkanal 134 umfassen. Der Schmutzkanal 134 befindet sich in dem Aufnahmeraum 138 und wird zur Sammlung des durch die Abstreifplatte 1223 von der Rolle 212 abgestreiften Schmutzes verwendet.

In konkreten Ausführungen kann der Schmutzkanal 134 mit dem Schmutzsammelkasten 133 kommunizieren, damit der in dem Schmutzkanal 134 gesammelte Schmutz in den Schmutzsammelkasten 133 eintreten kann.

In den Ausführungsbeispielen der Erfindung kann der Schmutzkanal 134 mit dem oberen Gehäuse 132 verbunden sein. Konkret kann der Schmutzkanal 134 einstückig an dem oberen Gehäuse 132 angeformt oder auch durch Verrasten oder mittels eines Fixiermittels mit dem oberen Gehäuse 132 verbunden sein.

In konkreten Ausführungen ist der Schmutzkanal 134 mit einer ersten Ausnehmung 1341 und einer zweiten Ausnehmung 1342 versehen, wobei die erste Ausnehmung 1341 zum Durchführen des Reibrads 1222 und die zweite Ausnehmung 1342 zum Durchführen der Abstreifplatte 1223 ausgebildet ist.

In einigen Ausführungsbeispielen der Erfindung ist die Oberfläche des oberen Gehäuses 132 teilweise eingesunken und bildet so eine Vertiefung zur Aufnahme der Bodenbürstenbaugruppe 21 des Staubsaugers 2 aus. Um einen Kontakt zwischen dem Reinigungsabschnitt 12 und der Bodenbürstenbaugruppe 21 zu ermöglichen, ist die Bodenwand 1321 der Vertiefung mit einer Öffnung 137 versehen, die zum Freilegen des Reinigungsabschnitts 12 dient, damit der Reinigungsabschnitt 12 mit der Bodenbürstenbaugruppe 21 in Kontakt treten kann. So legt die Öffnung 137 z. B. die Abstreifbürste 123 frei, so dass die Abstreifbürste 123 die Walzenbürste 211 kontaktieren kann. Außerdem wird über die Öffnung 137 beispielsweise die Abstreifplatte 1223 freigelegt, was wiederum einen Kontakt zwischen der Abstreifplatte 1223 und der Rolle 212 ermöglicht.

In einigen weiteren Ausführungsbeispielen der Erfindung umfasst das obere Gehäuse 132 eine Ablageplatte, die relativ zur unteren Abdeckung 131 beweglich mit dieser verbunden und mit einer Öffnung versehen ist, wobei sich die Ablageplatte beim Anordnen des Staubsaugers 2 auf die Ablageplatte zur unteren Abdeckung 131 hinbewegt, um über die Öffnung zumindest einen Teil des Reinigungsabschnitts 12 freizulegen. Wenn auf der Ablageplatte kein Staubsauger 2 angeordnet ist, befindet sich der Reinigungsabschnitt 12 unterhalb der Ablageplatte, wodurch gewährleistet werden kann, dass der Reinigungsabschnitt 12 erst beim Anordnen des Staubsaugers 2 auf die Ablageplatte freigelegt wird. Bei Nichtnutzung der Ladevorrichtung für einen Staubsauger 1 kann der Reinigungsabschnitt 12 in dem Aufnahmeraum 138 der Basisbaugruppe 13 verborgen sein, womit die Benutzungssicherheit der Ladevorrichtung für einen Staubsauger 1 erhöht werden kann.

In den Ausführungsbeispielen der Erfindung kann die Ablageplatte über ein drittes Federteil mit der unteren Abdeckung 131 verbunden sein. Das dritte Federteil kann Federn, elastisches Gummi oder anderweitige Bauteile, welche elastisch sind, umfassen. Die Anzahl des dritten Federteils lässt sich in Abhängigkeit von einem oder mehreren der folgenden Faktoren einstellen: die Größe der Ablageplatte, die Form der Ablageplatte, die Verformbarkeit des dritten Federteils, das Gewicht des Staubsaugers 2.

Die Ausführungsbeispiele der Erfindung stellen des Weiteren eine Staubsauganlage 100 bereit, die einen Staubsauger 2 und eine Ladevorrichtung umfasst. Als Ladevorrichtung kann eine Ladevorrichtung für einen Staubsauger 1 gemäß einem der oben erläuterten Ausführungsbeispiele der Erfindung zum Einsatz kommen. Bezüglich des konkreten Aufbaus und der Funktionsweise der Ladevorrichtung für einen Staubsauger 1 wird auf die Beschreibung der obenstehenden Ausführungsbeispiele verwiesen, auf die hier im Detail nicht mehr eingegangen wird.

Überdies schlagen die Ausführungsbeispiele der Erfindung ein Verfahren zur Steuerung einer Ladevorrichtung für einen Staubsauger vor, mit dem eine Ladevorrichtung für einen Staubsauger gemäß einem der oben erläuterten Ausführungsbeispiele der Erfindung gesteuert werden kann. Wie in Fig. 6 gezeigt ist, kann das Verfahren zur Steuerung einer Ladevorrichtung für einen Staubsauger im Einzelnen folgende Schritte umfassen:
- Schritt S61:: Ermitteln über den Reinigungsabschnitt beim Verbinden der ersten Ladeschnittstelle mit der zweiten Ladeschnittstelle, ob ein Reinigungsbefehl empfangen wird.
- Schritt S62:: Reinigen der Bodenbürstenbaugruppe 21 des Staubsaugers durch den Reinigungsabschnitt beim Empfang des Reinigungsbefehls.

In konkreten Ausführungen hört der Reinigungsabschnitt 12 dann mit der Reinigung der Bodenbürstenbaugruppe 21 auf, wenn ermittelt wird, dass die vom Reinigungsabschnitt 12 an der Bodenbürstenbaugruppe 21 vorgenommene Reinigung eine voreingestellte Dauer erreicht.

In konkreten Ausführungen wird bezüglich der Funktionsweise und des Arbeitsablaufs des Verfahrens zur Steuerung einer Ladevorrichtung für einen Staubsauger 1 auf die Beschreibung der Ladevorrichtung für einen Staubsauger 1 in den vorangehenden Ausführungsbeispielen der Erfindung verwiesen, auf die hier im Detail nicht mehr eingegangen wird.

Bisher wurden konkrete Ausführungen beschrieben, die nicht als Einschränkung des Offenlegungsumfangs der vorliegenden Erfindung aufgefasst werden sollen. Dazu gehören auch diejenigen einzelnen Ausführungen, die lediglich zum Erläutern spezifischer Merkmale dienen. Die in der Offenbarung der vorliegenden Erfindung bereitgestellten Merkmalsbeispiele gelten, soweit nicht anders vermerkt, nicht einschränkend, sondern als beispielhafte Darstellung. In konkreten Ausführungen können die Merkmale eines oder mehrerer Unteransprüche je nach Bedarf, soweit technisch möglich, nicht nur in der in den Ansprüchen jeweils angegebenen spezifischen Kombination, sondern in jeder geeigneten Weise, mit Merkmalen des entsprechenden unabhängigen Anspruchs kombiniert werden.

Es versteht sich, dass die vorliegende Erfindung nicht auf das oben Beschriebene beschränkt ist. Den Fachleuten auf diesem Gebiet wird klar sein, dass im Rahmen der vorliegenden Erfindung verschiedene Änderungen und Modifikationen möglich sind. Deshalb ist der Schutzumfang der vorliegenden Erfindung durch die beiliegenden Patentansprüche definiert.

### Bezugszeichenliste:

- 1: Ladevorrichtung für einen Staubsauger
- 2: Staubsauger
- 11: Ladeabschnitt
- 12: Reinigungsabschnitt
- 13: Basisbaugruppe
- 14: Träger
- 21: Bodenbürstenbaugruppe
- 100: Staubsauganlage
- 123: Abstreifbürste
- 121: Walzenbürstenreinigungsbaugruppe
- 123: Abstreifbürste
- 124: erstes Federteil
- 131: untere Abdeckung
- 132: oberes Gehäuse
- 133: Schmutzsammelkasten
- 134: Schmutzkanal
- 136: Montageöffnung
- 137: Öffnung
- 138: Aufnahmeraum
- 211: Walzenbürste
- 212: Rolle
- 311: dritte Getriebewelle
- 312: vierte Getriebewelle
- 313: fünfte Getriebewelle
- 314: sechste Getriebewelle
- 315: vierte Riemenscheibe
- 316: fünfte Riemenscheibe
- 318: siebte Riemenscheibe
- 319: achte Riemenscheibe
- 320: dritten Riemen
- 321: vierten Riemen
- 322: fünften Riemen
- 323: erstes Zahnrad
- 324: zweites Zahnrad
- 1222: Reibrad
- 1223: Abstreifplatte
- 1224: zweites Federteil
- 1225: Motor
- 1321: Bodenwand
- 1341: ersten Ausnehmung
- 1342: zweiten Ausnehmung

## Patentansprüche

1. Ladevorrichtung für einen Staubsauger (1), **dadurch gekennzeichnet, dass** sie einen Ladeabschnitt (11) und einen Reinigungsabschnitt (12) umfasst, wobei der Ladeabschnitt (11) eine erste Ladeschnittstelle aufweist, die zur Abstimmung auf eine zweite Ladeschnittstelle des Staubsaugers (2) eingerichtet ist, während der Reinigungsabschnitt (12) zur Kontaktierung mit einer Bodenbürstenbaugruppe (21) des Staubsaugers (2) eingerichtet ist und beim Verbinden der ersten Ladeschnittstelle mit der zweiten Ladeschnittstelle als Antwort auf einen Reinigungsbefehl eine Reinigung der Bodenbürstenbaugruppe (21) des Staubsaugers (2) durchführt.

2. Ladevorrichtung für einen Staubsauger (1) nach Anspruch 1, **dadurch gekennzeichnet, dass** sie ferner einen Einschaltknopf umfasst, durch dessen Drücken der Reinigungsbefehl erzeugt wird.

3. Ladevorrichtung für einen Staubsauger (1) nach Anspruch 2, **dadurch gekennzeichnet, dass**, wenn zum Zeitpunkt des Entstehens des Reinigungsbefehls der Staubsauger (2) durch den Ladeabschnitt (11) geladen wird, dieser Ladevorgang zunächst abgebrochen und erst dann fortgeführt wird, wenn der Reinigungsabschnitt (12) die Reinigung vollendet hat.

4. Ladevorrichtung für einen Staubsauger (1) nach Anspruch 1, **dadurch gekennzeichnet, dass** sie ferner Folgendes umfasst:
- eine Basisbaugruppe (13), in der der Reinigungsabschnitt (12) angeordnet ist;
- einen Träger (14), der an der Basisbaugruppe (13) befestigt ist und an dem sich der Ladeabschnitt (11) befindet.

5. Ladevorrichtung für einen Staubsauger (1) nach Anspruch 4, **dadurch gekennzeichnet, dass** die Basisbaugruppe (13) eine untere Abdeckung (131) und ein oberes Gehäuse (132) umfasst, wobei das obere Gehäuse (132) und die untere Abdeckung (131) lösbar miteinander verbunden sind und einen Aufnahmeraum (138) zur Aufnahme des Reinigungsabschnitts (12) einschließen, wobei bei auf dem oberen Gehäuse (132) angeordnetem Staubsauger (2) der Reinigungsabschnitt (12) mit der Bodenbürstenbaugruppe (21) des Staubsaugers (2) in Kontakt steht.

6. Ladevorrichtung für einen Staubsauger (1) nach Anspruch 5, **dadurch gekennzeichnet, dass** der Reinigungsabschnitt (12) eine Walzenbürstenreinigungsbaugruppe (121) umfasst, die eine Abstreifbürste (123) umfasst, wobei bei auf dem oberen Gehäuse (132) angeordnetem Staubsauger (2) die Abstreifbürste (123) mit einer Walzenbürste (211) in der Bodenbürstenbaugruppe (21) in Kontakt steht.

7. Ladevorrichtung für einen Staubsauger (1) nach Anspruch 6, **dadurch gekennzeichnet, dass** die Basisbaugruppe (13) ferner einen sich im Aufnahmeraum (138) befindenden Schmutzsammelkasten (133) zur Sammlung des durch die Abstreifbürste (123) von der Walzenbürste (211) beseitigten Schmutzes umfasst.

8. Ladevorrichtung für einen Staubsauger (1) nach Anspruch 6, **dadurch gekennzeichnet, dass** die Abstreifbürste (123) über ein erstes Federteil (124) an der unteren Abdeckung (131) befestigt ist.

9. Ladevorrichtung für einen Staubsauger (1) nach einem der Ansprüche 5 bis 8, **dadurch gekennzeichnet, dass** der Reinigungsabschnitt (12) ferner eine Rollenreinigungsbaugruppe umfasst, die einen Antrieb, ein Reibrad (1222) und eine Abstreifplatte (1223) umfasst, wobei
- der Antrieb in dem Aufnahmeraum (138) angeordnet ist und zum Antreiben des Reibrads (1222) zur Drehung dient,
- das Reibrad (1222) mit dem Antrieb gekoppelt ist und beim Anordnen des Staubsaugers (2) auf das obere Gehäuse (132) mit der Rolle (212) in der Bodenbürstenbaugruppe (21) in Kontakt tritt und bei der Drehung die Rolle (212) mitnimmt,
- sich die Abstreifplatte (1223) in dem Aufnahmeraum (138) befindet und mit der Rolle (212) in Kontakt steht.

10. Ladevorrichtung für einen Staubsauger (1) nach Anspruch 9, **dadurch gekennzeichnet, dass** die Abstreifplatte (1223) über ein zweites Federteil (1224) an der unteren Abdeckung (131) befestigt ist.

11. Ladevorrichtung für einen Staubsauger (1) nach Anspruch 9, **dadurch gekennzeichnet, dass** der Antrieb einen Motor (1225) und ein Getriebe umfasst, wobei der Motor (1225) mit dem Getriebe gekoppelt ist und zum Antreiben des Getriebes dient, während das Getriebe mit dem Reibrad (1222) verbunden ist und dazu dient, das Reibrad (1222) in Drehung zu bringen.

12. Ladevorrichtung für einen Staubsauger (1) nach Anspruch 9, **dadurch gekennzeichnet, dass** die Basisbaugruppe (13) ferner einen Schmutzkanal (134) umfasst, der sich in dem Aufnahmeraum (138) befindet und zur Sammlung des durch die Abstreifplatte (1223) von der Rolle (212) abgestreiften Schmutzes verwendet wird.

13. Ladevorrichtung für einen Staubsauger (1) nach Anspruch 12, **dadurch gekennzeichnet, dass** der Schmutzkanal (134) mit einer ersten Ausnehmung (1341) und einer zweiten Ausnehmung (1342) versehen ist, wobei die erste Ausnehmung (1341) zum Durchführen des Reibrads (1222) und die zweite Ausnehmung (1342) zum Durchführen der Abstreifplatte (1223) ausgebildet ist.

14. Ladevorrichtung für einen Staubsauger (1) nach Anspruch 5, **dadurch gekennzeichnet, dass** das obere Gehäuse (132) eine Ablageplatte umfasst, die relativ zur unteren Abdeckung (131) beweglich mit dieser verbunden und mit einer Öffnung versehen ist, wobei sich die Ablageplatte beim Anordnen des Staubsaugers (2) auf die Ablageplatte zur unteren Abdeckung (131) hinbewegt, um über die Öffnung zumindest einen Teil des Reinigungsabschnitts (12) freizulegen.

15. Ladevorrichtung für einen Staubsauger (1) nach Anspruch 1, **dadurch gekennzeichnet, dass** der Reinigungsabschnitt (12) als Antwort auf den Reinigungsbefehl ein Einschalt-Steuersignal erzeugt, das dazu dient, den Staubsauger (2) in Betrieb zu setzen.

16. Ladevorrichtung für einen Staubsauger (1) nach Anspruch 15, **dadurch gekennzeichnet, dass** der Ladeabschnitt (11) ferner eine Signalsendeschnittstelle umfasst, die zum Übertragen des empfangenen Einschalt-Steuersignals an eine Signalempfangsschnittstelle des Staubsaugers (2) dient.

17. Staubsauganlage (100), **dadurch gekennzeichnet, dass** sie einen Staubsauger (2) und eine Ladevorrichtung für einen Staubsauger (1) nach einem der Ansprüche 1 bis 16 umfasst.

18. Verfahren zur Steuerung einer Ladevorrichtung für einen Staubsauger (1) nach einem der Ansprüche 1 bis 16, **dadurch gekennzeichnet, dass** es Folgendes umfasst:
- Ermitteln über den Reinigungsabschnitt (12) beim Verbinden der ersten Ladeschnittstelle mit der zweiten Ladeschnittstelle, ob ein Reinigungsbefehl empfangen wird;
- Reinigen der Bodenbürstenbaugruppe (21) des Staubsaugers (2) durch den Reinigungsabschnitt (12) beim Empfang des Reinigungsbefehls.

19. Steuerverfahren nach Anspruch 18, **dadurch gekennzeichnet, dass** es ferner Folgendes umfasst: der Reinigungsabschnitt (12) dann mit der Reinigung der Bodenbürstenbaugruppe (21) aufhört, wenn ermittelt wird, dass die vom Reinigungsabschnitt (12) an der Bodenbürstenbaugruppe (21) vorgenommene Reinigung eine voreingestellte Dauer erreicht.
